# EUROPEAN PATENT APPLICATION

(11) **EP 2 351 941 A1**
(43) Date of publication of application: **03.08.2011**
(21) Application number: 09829104.0
(22) Date of filing: 25.11.2009
(51) Int. Cl.: F16D 25/0638

(54) **FRICTION COUPLING DEVICE**

(30) Priority: 25.11.2008 JP 2008299020; 25.11.2009 JP 2009266966
(71) Applicant: Nissan Motor Co., Ltd., Yokohama-shi, Kanagawa 221-0023 (JP)
(72) Inventor: KUWAHARA, Takashi, Kanagawa 243-0123 (JP); ISHII, Shigeru, Kanagawa 243-0123 (JP)
(74) Representative: Grünecker, Kinkeldey, Stockmair & Schwanhäusser Anwaltssozietät
(86) International application number: PCT/JP2009/069882
(87) International publication number: WO 2010/061856

(57) **Abstract**

In a friction coupling device, a restriction mechanism is further provided for restricting relative movement between a cylinder member and a drum member. The restriction mechanism is located on the cylinder-chamber side than friction plates in a pressing direction of a piston, and thus the friction coupling device can realize stable coupling operations without increasing the thickness of an outer wall or the like.

## Description

### TECHNICAL FIELD

The present invention relates to a friction coupling device.

### BACKGROUND ART

Patent document 1 has disclosed a conventional friction coupling device. The friction coupling device is configured to engage dry clutch plates by a movement of a piston in a cylinder formed in a motor cover under oil pressure supplied.
Patent document 1: Japanese Patent Provisional Publication No. 2006-137406 (A)

### DISCLOSURE OF THE INVENTION

### TASK SOLVED BY THE INVENTION

In the device disclosed in Patent document 1, a hydraulic chamber, needed for a piston stroke, is formed in a motor cover supported on an outer wall, whereas a rotor, on which a pressing force acts, is supported on a partition wall also supported on the outer wall. Hence, a reaction force, resulting from oil pressure, has to be received by the motor cover, the partition wall, and the outer wall. At this time, it is necessary to set the thicknesses of the motor cover and the outer wall that supports the former to sufficient thicknesses to support the reaction force, resulting from oil pressure. This leads to the problem of an increased axial length of a transmission unit. Also, in the case of the insufficient thickness, there is a problem of a lack in mechanical strength for the partition wall. This also leads to another problem, for example, a lack of the applied clutch-plate pressing force, a lack of the piston stroke, or the like.

### MEANS TO SOLVE THE TASK

It is, therefore, in view of the previously-described disadvantages of the prior art, to provide a friction coupling device configured to realize stable coupling operations without increasing the thickness of an outer wall or the like.

In order to accomplish the aforementioned and other objects, in a friction coupling device of the present invention, a restriction mechanism is provided for restricting relative movement between a cylinder member and a drum member in an axial direction via a bearing arranged between the cylinder member and the drum member.

### EFFCTS OF THE INVENTION

Therefore, according to the friction coupling device of the present invention, when the friction coupling device is engaged, a pressing force, which presses friction plates, is exerted on a piston, whereas a reaction force, resulting from the pressing force, is exerted on a cylinder member.
At this time, by means of the restriction mechanism, the pressing force and its reaction force can be canceled via the bearing, and thus the forces of action and reaction never act on the outer wall on which the cylinder member is supported. Hence, it is possible to realize stable coupling operations without increasing the thickness of the outer wall or the like.

### BRIEF DESCRIPTION OF THE DRAWINGS

[FIG. 1] Fig. 1 is a partially-enlarged cross-sectional view illustrating a dry clutch, which is a friction coupling device of the first embodiment.
[FIG. 2] Figs. 2A-2C are enlarged cross-sectional views illustrating a restriction means of the first embodiment, constructed by ball bearings.
[FIG. 3] Fig. 3 is a cross-sectional view illustrating a route of action of force during engagement of the device of the first embodiment.
[FIG. 4] Figs. 4A-4B are explanatory drawings illustrating the difference between the route of action of force of the comparative example and the route of action of force of the first embodiment.
[FIG. 5] Fig. 5 is a partially-enlarged cross-sectional view illustrating a dry clutch, which is a friction coupling device of the second embodiment.
[FIG. 6] Fig. 6 is a cross-sectional view illustrating a route of action of force during engagement of the device of the second embodiment.
[FIG. 7] Fig. 7 is a partial cross section illustrating the third embodiment in which the dry clutch of the first embodiment is applied to a hybrid vehicle.
[FIG. 8] Figs. 8A-8B are perspective views illustrating a detailed structure of the second piston applied to the third embodiment.

### DESCRIPTION OF THE PREFERRED EMBODIMENTS

### FIRST EMBODIMENT

The friction coupling device of the present invention is hereunder explained in detail in reference to the drawings of the embodiments shown.

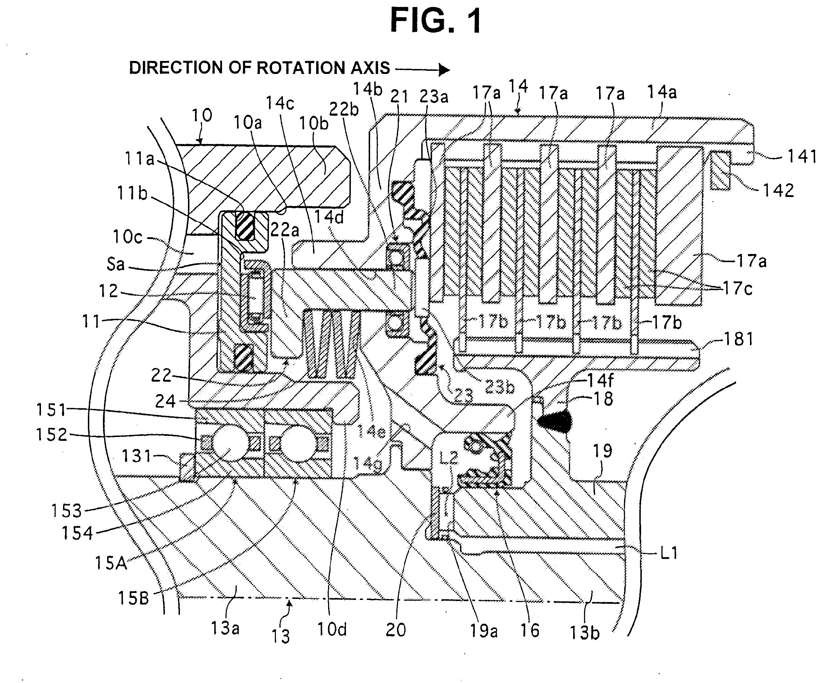

Fig. 1 is the partially-enlarged cross-sectional view illustrating a dry clutch, which is the friction coupling device of the first embodiment. The dry clutch of the first embodiment is a clutch configured to engage and release a first rotor 13 with and from a second rotor 19 (including a hub member 18 described later). As hereinafter described in detail, the dry clutch is constructed by a plurality of component parts, namely, dry-clutch plates, pistons, and the like. Herein, the direction indicated by the arrow in Fig. 1 is defined as a direction of rotation axis.

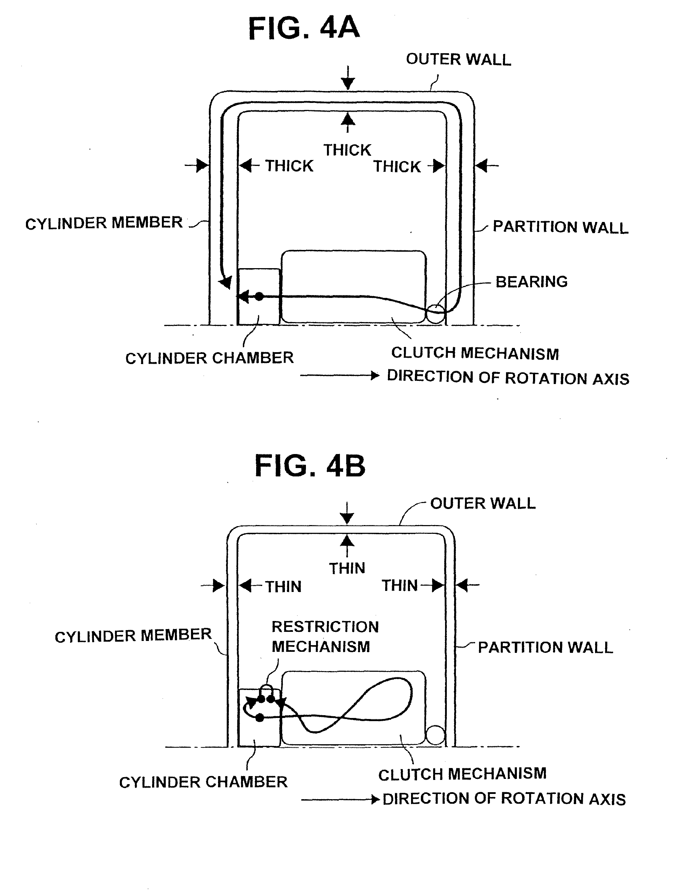

A cylinder member 10, serving as a non-rotational member supported on an outer wall (see Fig. 4B) of a transmission case, is provided with a cylindrical extension 10b, extending in the rotation-axis direction. A cylinder groove 10a is formed as an annular bore closed at one end, on the side of the extension 10b, opposite to the rotation-axis direction. An oil passage 10c, formed in the cylinder member 10, is opened into the bottom of the cylinder groove 10a.

An annularly-shaped, first piston 11 is accommodated in the cylinder groove 10a. Seal members 11a are fitted into respective grooves, namely, an inner peripheral side grooved portion and an outer peripheral side grooved portion of the first piston 11, in a manner so as to permit the piston to slide in the cylinder groove 10a, while ensuring a fluid-tight relationship between the cylinder groove 10a and each of the seal members. Consequently, a cylinder chamber Sa is defined between the cylinder groove 10a and the backface of the first piston 11.

A recessed groove 11b is formed in the sidewall portion interconnecting the inner peripheral side and the outer peripheral side of the first piston 11. A thrust bearing 12 is accommodated in the recessed groove 11b. The depth of recessed groove 11b is shaped and dimensioned to be shallower than the total axial thickness containing both the thicknesses of inner and outer races of thrust bearing 12 in the rotation-axis direction.

A second piston 22 is arranged on the side of thrust bearing 12, facing in the rotation-axis direction. The second piston 22 has an annular piston-body section 22a and a lug section 22b having a plurality of substantially cylindrical, circumferentially-arranged and put-up lugs.
The backface of the piston-body section 22a of the second piston 22 is kept in contact with the thrust bearing 12, and thus it is possible to transmit only a thrust force, while permitting relative rotation between the first and second pistons 11 and 22. The supporting structure of the second piston 22 is described later.

A clutch member 14 is attached onto the first rotor 13, which is rotatably supported on the outer wall. The clutch member 14 has a partition wall portion 14b (a blocking-off member) extending radially from the outer periphery of the first rotor, and a drum portion 14a extending from the outer periphery of the partition wall portion 14b in the rotation-axis direction. Integrally formed on the side face of the partition wall portion 14b, facing the first piston, is a small cylindrical portion 14c extending in the direction opposite to the rotation-axis direction. The second piston 22 is supported on the inner periphery of small cylindrical portion 14c in a manner so as to be axially movable.

Furthermore, the partition wall portion 14b has a piston bore 14d extending along the inner periphery of small cylindrical portion 14c. The piston bore 14d is formed and configured to be substantially conformable to the position of lug section 22b. The bore diameter of the piston bore is dimensioned to be substantially identical to the circumference of the lug section 22b. Also, the outermost peripheral section of piston bore 14d is configured to be substantially conformable to the inner periphery of small cylindrical portion 14c. Thus, the circumference of the lug section 22b can be supported by the inner periphery of small cylindrical portion 14c. That is, it is possible to provide a stable supporting structure by lengthening the axial length of the supporting portion in the rotation-axis direction.

A spring supporting flat face 14e is formed on the side face of the partition wall portion 14b, facing the first piston, and on the radially inward side of piston bore 14d. A return spring 24 is disposed between the piston-body section 22a of the second piston 22 and the spring supporting flat face 14e, such that a force is exerted from the partition wall portion 14b on the second piston 22 to force the second piston in the direction opposite to the rotation-axis direction.

A reciprocation seal 21 is fitted to the opening of piston bore 14d, facing a dry-clutch plate 17a in a fluid-tight fashion. The reciprocation seal 21 serves as a fluid-tight seal for preventing a lubricating-oil leakage from the aperture between the piston bore 14d and each of lugs of lug section 22b even when the lug section 22b axially reciprocates.

Furthermore, the blocking-off member 23 is installed on the side of partition wall portion 14b, facing the dry-clutch plate 17a. The blocking-off member 23 has a blocking-off section 23a made of an elastic material and a motion-transmission section 23b sandwiched between the top of lug section 22b and the dry-clutch plate 17a. Blocking-off section 23a is a flexible member, which is able to self-support to such an extent that the transmission section 23b can be held in place, and also to easily deform elastically. Rubber or resin material, or metal bellows can be applied to such a flexible member. Transmission section 23b is formed of a ring-shaped metal material, whose diameter is dimensioned to be greater than the circumference of the lug section 22b. The transmission section acts to transmit a pressing force from the lug section 22b therevia directly to the drive-side dry-clutch plate 17a.

Transmission section 23b is supported on and fixedly connected to the blocking-off section 23a in a fluid-tight relationship therebetween. In other words, transmission section 23b is supported on the first rotor 13 and configured to transmit an axial force, produced by a stroke of the first piston 11, to the dry-clutch plate 17a. Also, inner and outer peripheries of blocking-off section 23a are fixedly connected to the partition wall portion 14b in a fluid-tight fashion. Hereby, even if a leakage of lubricating oil from the reciprocation seal 21 occurs, there is no risk of lubricating-oil leakage toward the side of the dry clutch. In the embodiment, an actuator, which is provided for engaging or disengaging the clutch plates 17, is mainly constructed by the first piston 11, the thrust bearing 12, the second piston 22, and the transmission section 23b.

An internal spline 141 is formed on the inner periphery of drum portion 14a. A snap ring 142 is attached to the axial end of the spline 141 in the rotation-axis direction. A plurality of drive-side dry-clutch plates 17a are splined to the spline 141. Also, each of driven-side dry-clutch plates 17b is sandwiched between the associated drive-side dry-clutch plates 17a, such that the drive-side clutch plates and the driven-side clutch plates alternate each other, in the rotation-axis direction. Friction facings 17c are attached onto respective side faces of each of driven-side dry-clutch plates 17b. By the way, drive-side dry-clutch plates 17a and driven-side dry-clutch plates 17b are collectively referred to as "dry-clutch plates (friction plates) 17".

A hub member 18 is arranged on the inner peripheral side of driven-side dry-clutch plates 17b and has an external spline 181 to which drive-side dry-clutch plates 17b are splined. The inner periphery of hub member 18 is welded to the second rotor 19, which is rotatably supported on the outer wall.

The second rotor 19 is formed into a cylindrical hollow shape. A small-diameter portion 13b of the first rotor 13 is inserted into and arranged on the inner peripheral side of the second rotor. An oil passage L1 is defined by the clearance space between the outer periphery of small-diameter portion 13b and the inner periphery of the second rotor 19. An oil seal 16 is installed between the outer periphery of the second rotor 19 and the inner periphery of a seal-retaining cylindrical portion 14f formed integral with the partition wall portion 14b in a manner so as to axially extend in the vicinity of the inner periphery of partition wall portion 14b in the rotation-axis direction. Also, an oil passage 14g is formed in the partition wall portion 14b in a manner so as to open into the inner peripheral side of seal-retaining cylindrical portion 14f. Furthermore, an annular bearing member 20 is interposed between the axial end face of the second rotor 19, facing in the direction opposite to the rotation-axis direction, and the stepped face of large-diameter and small-diameter portions 13a and 13b of the first rotor 13, thus enhancing a wear-and-abrasion resistance when relative rotation between the first rotor 13 and the second rotor 19 takes place. Moreover, a partially-recessed groove 19a is formed on the axial end face of the second rotor 19, facing in the direction opposite to the rotation-axis direction. The groove 19a is formed as an oil passage L2.

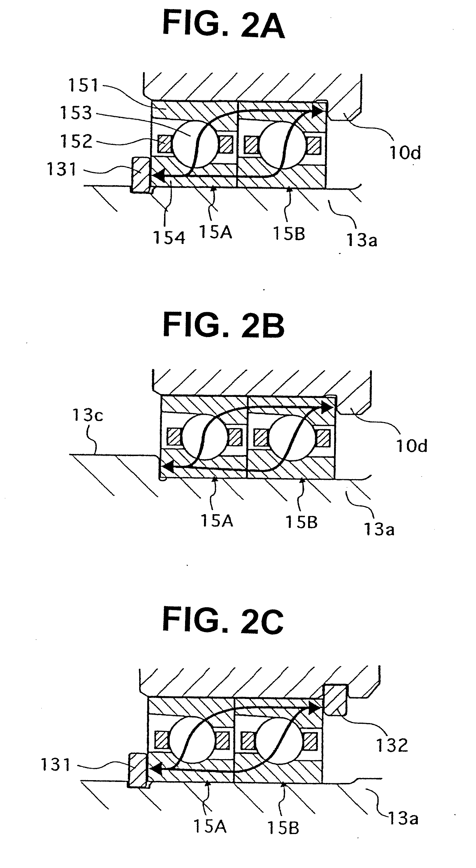

Two ball bearings 15A and 15B are installed on the inner peripheral side of cylinder member 10 in a manner so as to be juxtaposed to each other. Fig. 2A is the enlarged cross-sectional view illustrating the restriction means of the first embodiment, constructed by the ball bearings.
Ball bearing 15B is engaged with cylinder member 10 such that the axial end of its outer race, facing in the rotation-axis direction, is kept in abutted-engagement with an engaged section 10d extending inwards from the inner periphery of cylinder member 10, in the rotation-axis direction. Also, the adjacent ball bearing 15A is engaged with a snap ring 131 such that the axial end of its inner race, facing in the direction opposite to the rotation-axis direction, is kept in abutted-engagement with the snap ring, in the opposite axial direction. Additionally, snap ring 131 is fitted into a groove formed on the outer periphery of the first rotor 13. The engaged section 10d, the snap ring 131, and ball bearings 15A and 15B construct the restriction mechanism. By the provision of the restriction mechanism, it is possible to ensure the controllability of the dry clutch regardless of the strength of the whole cylinder member 10 and the strength of the outer wall or the like, if only the strength of the inner peripheral portion of cylinder member 10 is ensured. The detailed structure of the restriction mechanism is described later.

In the first embodiment, as ball bearings 15A-15B, ball bearings, each having the same specification, are used, and thus only the ball bearing 15A is hereunder described in detail. Ball bearing 15A is comprised of an inner race 154 supported on the outer periphery of large-diameter portion 13a of the first rotor 13, an outer race 151 supported on the inner periphery of cylinder member 10, a plurality of balls 153 confined between inner and outer races 154 and 151 and spaced from each other circumferentially, and a cage 152 for holding each of balls 153 in place.

The outer peripheral side of inner race 154, facing the balls 153, is formed into a tapered shape whose cross-section is tapered downward (viewing in the drawing) and decreased in the rotation-axis direction. In a similar manner, the inner peripheral side of outer race 151, facing the balls 153, is formed into a tapered shape whose cross section is tapered upward (viewing in the drawing) and decreased in the direction opposite to the rotation-axis direction. That is, the ball bearing constructs an angular ball bearing.

The heavy, solid lines of Fig. 2A show the forces of action and reaction through the ball bearings. When a thrust force, acting in the rotation-axis direction, is imposed on the first rotor 13, an axial force, transferred from snap ring 131, acts on the inner races 154 of ball bearings 15A-15B adjacent to each other. This force is transmitted via balls 153 to outer races 151, and then transmitted to the engaged section 10d at which the ball bearing is engaged with the inner periphery of cylinder member 10. In this manner, the thrust force, inputted into the first rotor 13, is stably supported through ball bearings 15A and 15B, thus realizing a stable rotary-motion support. Also, during releasing period of the dry clutch, ball bearings 15A-15B are preloaded by a reaction of return spring 24. Thus, even during the releasing period, it is possible to absorb a play, thus realizing a stable rotary-motion support.

Fig. 2B shows a first example modified from the restriction means of the first embodiment, constructed by ball bearings. In the first embodiment, a combination of the engaged section 10d, extending inwards from the inner periphery of cylinder member 10, and snap ring 131 are exemplified. In contrast to the above, in the first modification, instead of using the snap ring 131, the first rotor 13 is formed with a stepped portion 13c having an outside diameter greater than that of large-diameter portion 13a. That is, the first modification is constructed by a combination of the two stepped portions, comprised of the above-mentioned stepped portion and the engaged section.
Fig. 2C shows a second example modified from the restriction means of the first embodiment. In the second modification, the engaged section 10d is replaced by a snap ring 132.
That is, the second modification is constructed by a combination of the two snap rings.

As discussed above, ball bearings 15A-15B have to rotatably support the first rotor 13 and also to receive the thrust force, occurring due to engagement of the dry clutch. For this reason, the two ball bearings, each having the same specification, are installed in parallel with each other. However, assuming that two contradictory requirements, that is, an ensured load capacity and low costs can be reconciled, it will be understood that the restriction means is not limited to two ball bearings. In lieu thereof, a single taper roller bearing or a plurality of taper roller bearings may be used. Alternatively, three or more ball bearings may be installed.

### [ENGAGING AND RELEASING ACTION OF CLUTCH]

Engaging and releasing action of the dry clutch is hereunder described in detail. Herein, an initial state, recited in the explanation of the engaging/releasing action, is defined as a specific state where the first rotor 13 is in a stopped state, and additionally the second rotor 19 is rotating. Thus, in the initial state, there is no relative rotation between the first piston 11 and the second piston 22, and additionally, the first and second pistons 11 and 22 are both forced and positioned leftwards (viewing in Fig. 1) by means of return spring 24.

When an oil pressure is supplied from a hydraulic control unit (not shown) toward the oil passage 10c, oil flows into cylinder chamber Sa and thus an oil pressure, whose magnitude is dependent on the spring bias of return spring 24 and the resistance to sliding motion, is produced. As a result, a thrust force acts on the first piston 11. The thrust force is transmitted through thrust bearing 12 to the second piston 22, in a manner so as to movie the first and second pistons 11 and 22 against the spring bias of return spring 24 in the rotation-axis direction. By virtue of the displacement (the piston stroke), the Transmission section 23b is displaced in the rotation-axis direction by a push of the top of lug section 22b, and then a play-elimination is made to such an extent that a group of dry-clutch plates 17a, 17b, and 17c are brought into abutted-engagement with the snap ring 142. At this time, owing to the displacement of the second piston 22, transmission section 23b also moves in the rotation-axis direction, and hence an appropriate reformation of the blocking-off section 23a occurs.

As soon as the play-elimination has been completed, the displacement of each of the pistons also terminates, and then an engagement pressure, which is set by means of the hydraulic control unit, begins to occur. Depending on the engagement pressure occurring, torque of the second rotor 19 can be transmitted to the first rotor 13, and thus the first rotor 13 begins to rotate. On the one hand, the second piston 22 is installed on the first rotor 13. On the other hand, the first piston 11 is installed on the cylinder member 10. Hence, when the first rotor 13 begins to rotate, the second piston 22 also begins to rotate. As a result, relative rotation between the second piston 22 and the first piston 11 via the thrust bearing 12 occurs.

### [ROUTE OF ACTION OF FORCE DURING ENGAGING PERIOD]

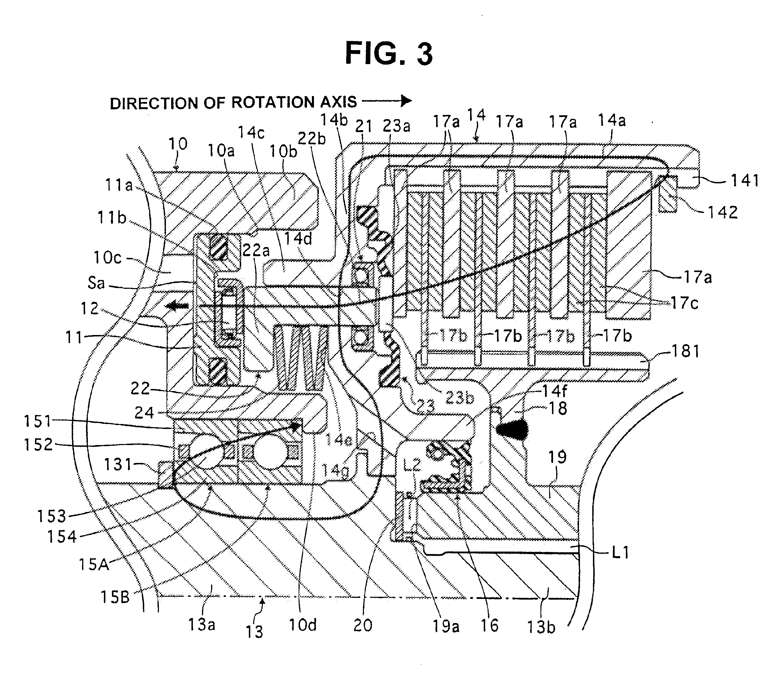

Fig. 3 shows the route of action of force during engagement. The heavy, solid line of Fig. 3 indicates the route of action of force. As discussed previously, under a state where the clutch engagement pressure occurs, as viewed in the rotation-axis direction, a push of each of the pistons finally acts on the snap ring 142. As a result of this, by means of the snap ring 142 forced in the rotation-axis direction, clutch member 14 is pushed in the direction (that is, in the rotation-axis direction) spaced apart from the cylinder member 10.

Consequently, the first rotor 13, coupled to the clutch member 14, is also pulled in the rotation-axis direction by a force (hereinafter referred to as "pulling force"). At this time, because of the snap ring 131 installed on the first rotor 13, the pulling force acts on the inner races 154 of ball bearings 15A and 15B through the snap ring 131. As appreciated from the above, the pulling force is finally transmitted to the engaged portion 10d.

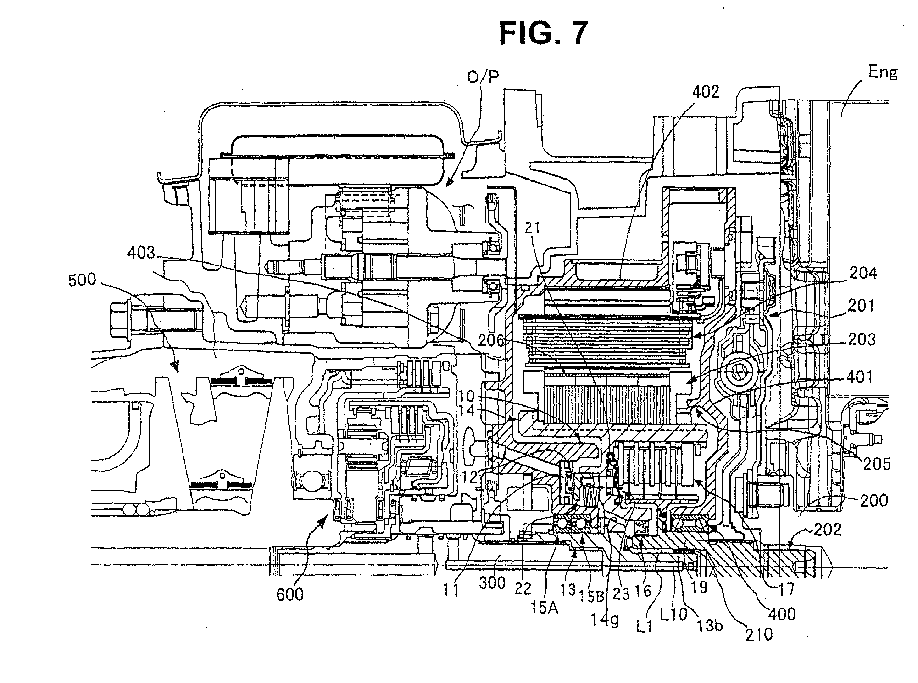

Figs. 4A-4B are explanatory drawings illustrating the difference between the route of action of force of the comparative example and the route of action of force of the first embodiment. Fig. 4A shows the comparative example, whereas Fig. 4B shows the first embodiment. Each of the heavy, solid lines of Figs. 4A-4B shows the route of action of force. In these drawings, the outer wall corresponds to wall sections (wall members), which surround the circumference of the friction coupling device (see wall sections denoted by reference signs 401, 402, and 403 in Fig. 7). The cylinder member is constructed by a part of the outer wall. In other words, the actuator, which is provided for engaging or disengaging clutch plates 17, is supported on the outer wall. Furthermore, the radially-extending wall sections, arranged to surround respective axial ends of the friction coupling device in the rotation-axis direction, are hereinafter referred to as "partition walls". Each of the partition walls is a vertical wall, which is integrally formed with the outer wall by casting, or formed separately from the outer wall and integrally connected to the outer wall by means of bolts (see the wall sections denoted by reference signs 401 and 403).

The comparative example is constructed such that the rotor is supported on the partition wall via the bearing.
In such a case, the engagement pressure, occurring in the cylinder chamber, acts as a piston pressing force in the rotation-axis direction. The piston pressing force is transmitted through the clutch mechanism and the bearing, which bearing is installed in the clutch mechanism for supporting the rotor, to the partition wall. On the other hand, regarding the cylinder chamber, a reaction force acts on the cylinder member in the direction opposite to the direction of action of the piston pressing force, in such a manner as to extend both axial ends of the cylinder member.

That is, the reaction force acts to extend the width of the enclosed space defined by the cylinder member, the outer wall, and the partition walls. Hence, if all walls are not formed thick, the width of the enclosed space may be extended by force. This leads to the problem, for example, a lack of the piston pressing force during engagement of the clutch or a deterioration in clutch controllability, arising from a lack of the piston stroke during engagement of the clutch. This tendency becomes remarkable due to the principle of leverage (i.e., the increased moment of force), as the radial size of each of the cylinder member and the vertical walls increases.

In contrast to the above, the first embodiment is constructed such that a reaction force, opposing to the pressing force of the piston 11, that is, a reaction force of the actuator, opposing to the pressing force, is transmitted to cylinder chamber Sa as much as possible, that is, to a part of the outer wall closer to the actuator. Thus, there is no risk that the reaction force, resulting from the pressing force applied from the piston to the clutch plates, is transmitted around the entire circumference of the outer wall with long distance. In particular, in the first embodiment, the restriction mechanism is provided on the inner peripheral portion of cylinder member 10, which chamber defines therein the cylinder chamber. Even when the engagement pressure, occurring in the cylinder chamber, acts as a piston pressing force in the rotation-axis direction, by the provision of the restriction mechanism force-transmission is achieved by the bearings. Thus, it is possible to return the force again around the cylinder chamber without passing through the partition walls and the outer wall. That is, by ensuring a sufficient strength of only the inner periphery of cylinder member 10, in other words, a sufficient strength of only the periphery of the restriction mechanism, it is possible to ensure the dry-clutch controllability, regardless of the strength of the whole cylinder member 10 and the strength of each of the whole outer wall and the whole partition walls.
In other words, the above-mentioned construction of the first embodiment corresponds to a construction in which a force applied from the clutch member 14 in the pressing direction of the piston can be received. That is to say, a force, created owing to the occurrence of oil pressure and necessarily acting in the direction opposite to a pressing direction of the piston, is imposed on cylinder member 10. At this time, assuming that the device of the embodiment is constructed such that a force, acting in the same direction as the piston pressing direction, is inputted from the clutch member 14, on which the piston pressing force acts, to the cylinder member 10, cancellation of the forces, both imposed on cylinder member 10, can be achieved. By the way, in the comparative example, the force, applied from the clutch mechanism in the pressing direction of the piston, is merely inputted through the bearing to the partition wall, but not inputted to the cylinder member. In this manner, according to the embodiment, it is possible to provide a friction coupling device including the first rotor 13, which is a rotatable member rotatably supported on the outer wall and configured to support clutch plates 17 serving as friction plates, the piston 11 and the like, corresponding to the actuator for producing a pressing force that pushes the friction plates, the snap ring 142 serving as a restriction means for restricting relative movement of the friction plates to the rotatable member during action of the pressing force, and the snap ring 131 and/or the engaged section 10d serving as a restriction means for restricting relative movement of the rotatable member to a part of the outer wall closer to the actuator. Thus, a reaction force of the pressing force, acting on the outer wall via the rotor, acts on the part of the outer wall closer to the actuator. Hereby, there is no risk that the reaction force, resulting from the pressing force applied from the piston to the clutch plates, is transmitted around the entire circumference of the outer wall with long distance. Hence, it is possible to suppress a radial bending moment of the outer wall (the vertical walls).

In particular, in the first embodiment, the friction coupling device is applied to a dry clutch, which operates as engagement elements for coupling two rotors and in which the first piston 11 and the second piston 22 are provided separately from each other, and additionally cylinder chamber Sa is defined in the inner peripheral portion of cylinder member 10, serving as a non-rotational member. Therefore, it is possible easily ensure the strength of the inner peripheral portion of the cylinder member, thereby more efficiently enhance the controllability of the clutch.
Additionally, force-transmission is achieved by means of ball bearings 15A-15B. Hence, it is possible to shorten the radial distance of force-transmission between cylinder member 10 and clutch member 14, thus suppressing the occurrence of moment.

### [DISTRIBUTION CHANNEL OF LUBRICATING OIL]

The distribution channel of lubricating oil is hereunder described in detail. Lubricating oil, supplied from the hydraulic control unit (not shown), first, passes through the oil passage L1 defined between the outer periphery of the first rotor 13 and the inner periphery of the second rotor 19, and then passes through the oil passage L2 formed on the axial end of the second rotor 19, facing in the direction opposite to the rotation-axis direction, and delivered to the oil passage 14g. At this time, oil seal 16 prevents lubricating oil from flowing out toward the dry-clutch side.

A part of lubricating oil, flowing from the oil passage 14g toward the piston side, flows into the ball bearings 15A and 15B. Also, a part of the lubricating oil, delivered from the oil passage, flows into the thrust bearing 12. Even when the lubricating oil has been supplied to the second piston 22, by means of reciprocation seal 21 and blocking-off member 23 there is no risk that the lubricating oil flows into the dry-clutch side.

In taking the lubricating-oil distribution channel, it is possible to certainly supply lubricating oil to each of ball bearings 15A and 15B and thrust bearing 12, each supporting a high load. As appreciated from the above, irrespective of lubricating-oil supply, there is no risk that the supplied lubricating oil flows into the dry-clutch side.

As explained above, the friction coupling device of the first embodiment provides the following enumerated operation and effects.
(1) The friction coupling device includes a cylinder member 10 supported on an outer wall and having a cylinder chamber Sa, a first piston 11 and a second piston 22 (a **piston**) for pushing dry-clutch plates 17 (friction plates) by an oil pressure occurring in the cylinder chamber Sa, a clutch member 14 (a drum member) for supporting the dry-clutch plates 17, ball bearings 15A-15B and a thrust bearing 12 (a bearing) disposed between the cylinder member 10 and the clutch member 14 for permitting relative rotation between the cylinder member and the clutch member, and a restriction mechanism for restricting relative movement between the cylinder member 10 and the clutch member 14 in an axial direction via the ball bearings 15A-15B and the thrust bearing 12 (the bearing).

That is, by the provision of the restriction mechanism, the pressing force and its reaction force are canceled via the bearings, and thus the forces of action and reaction are not applied to the outer wall on which the cylinder member 10 is supported. Hereby, it is possible to realize stable coupling operations without increasing the thickness of the outer wall or the like. Additionally, force-transmission is achieved by means of the bearings, and hence it is possible to shorten a distance of force-transmission between the cylinder member and the clutch member, thus suppressing the occurrence of moment.

(2) The restriction mechanism is configured to restrict the relative movement between the cylinder member 10 and the clutch member 14 in the axial direction by abutting ball bearings 15A-15B with an engaged section 10d (a stepped portion) formed on the cylinder member 10 and a snap ring 131 installed on a first rotor 13 to which the clutch member 14 is integrally connected.

Thus, it is possible to transmit a force acting in the axial direction, while enabling relative rotation between the cylinder member 10 and the clutch member 14.

(2-1) By the way, instead of using the snap ring 131, the first rotor 13 is formed with a stepped portion 13c having an outside diameter greater than that of a large-diameter portion 13a of the first rotor. That is, the restriction mechanism may be constructed by a combination of the two stepped portions (see Fig. 2B). Alternatively, the engaged section 10d may be replaced by a snap ring 132. That is, the restriction mechanism may be constructed by a combination of the two snap rings (see Fig. 2C). Either one of the above-mentioned modifications can provide the same operation and effects.

(3) The previously-discussed **piston** includes the first piston 11 supported on the cylinder member 10, the second piston 22 operated responsively to a stroke of the first piston 11, and the bearing 12 interposed between the first piston 11 and the second piston 22 for permitting relative rotation between the first and second pistons. The **dry-clutch plates 17** are dry-clutch plates provided for coupling or uncoupling two rotors.

That is, the friction coupling device is applied to the clutch, which operates as engagement elements for coupling the two rotors and in which the cylinder chamber Sa is defined in the inner peripheral portion of the cylinder member 10, serving as a non-rotational member. Therefore, it is possible to easily ensure the strength of the inner peripheral portion of the cylinder member, thereby more efficiently enhance the controllability of the clutch.

### SECOND EMBODIMENT

The second embodiment is hereunder described in detail. The fundamental construction of the second embodiment is similar to that of the first embodiment. For the purpose of simplification of the disclosure, the same reference signs used to designate elements in the first embodiment will be applied to the corresponding elements used in the second embodiment, while only the different points will be hereunder described in detail.

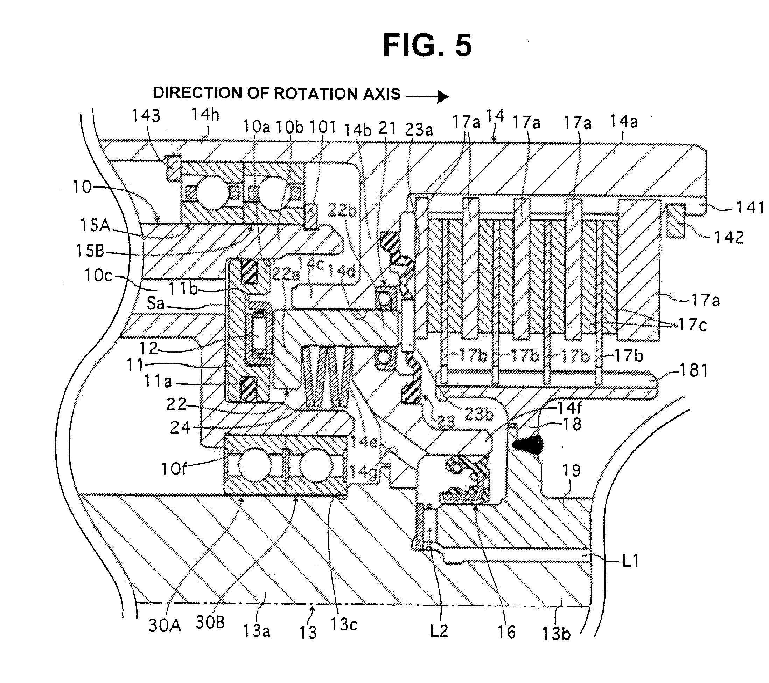

Fig. 5 is the partially-enlarged cross-sectional view illustrating a dry clutch, which is the friction coupling device of the second embodiment. In the first embodiment, ball bearings 15A-15B are installed between the inner peripheral side of cylinder member 10 and the outer periphery of the first rotor 13. In contrast, in the second embodiment, as one different point, ball bearings 15A-15B are installed between the outer periphery of extension 10b formed on **the inner peripheral portion of** cylinder member 10 and the clutch member 14.

Ball bearings 30A and 30B are installed in parallel with each other and arranged at the same position at which ball bearings 15A-15B of the device of the first embodiment are installed. Ball bearings 30A-30B are configured to restrict **movement** in the axial direction by abutting these ball bearings with an engaged section 10f formed on the inner peripheral side of extension **10d** and a stepped portion 13c formed on the outer periphery of the first rotor 13. By the way, in the second embodiment, a thrust force, occurring due to engagement of the dry clutch, is not inputted into the ball bearings 30A-30B. Thus, as another different point, normal ball bearings are installed instead of using angular ball bearings. This is because the engaged section 10f and the stepped portion 13c are configured such that the distance between them becomes wide, even when the first rotor 13 moves in the rotation-axis direction.

Clutch member 14 has a cylindrical portion 14h located substantially at the same radial position as the drum portion 14a and formed into a cylindrical shape extending in direction opposite to the rotation-axis direction. The cylindrical portion 14h is arranged to cover the outer peripheral side of extension **10d** as viewed in the radial direction. A snap ring 143 is installed on the inner periphery of cylindrical portion 14h, whereas a snap ring 101 is installed on the outer periphery of extension **10d**.

The restriction mechanism is constructed by abutment of ball bearings 15A-15B with snap ring 101 installed on the outer periphery of extension **10d** and **snap ring** installed on the inner periphery of cylindrical portion 14h. This restriction mechanism corresponds to the specific type shown in Fig. 2C, but another type of Fig. 2A or Fig. 2B may be adopted.

### [ROUTE OF ACTION OF FORCE DURING ENGAGING PERIOD]

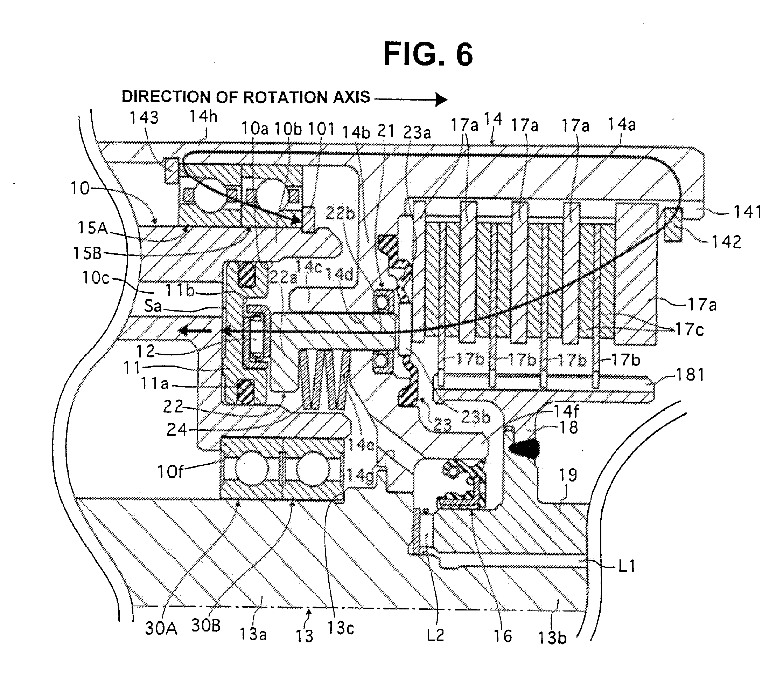

Fig. 6 shows the route of action of force during engagement. The heavy, solid line of Fig. 6 indicates the route of action of force. As discussed previously, under a state where the clutch engagement pressure occurs, as viewed in the rotation-axis direction, a push (a pressing force) of each of the pistons finally acts on the snap ring 142. Thus, clutch member 14 is pushed by snap ring 142 in the direction spaced apart from the cylinder member 10. In other words, the clutch member 14 is pulled in the rotation-axis direction.

At this time, because of snap ring 143 installed on the inner periphery of cylindrical portion 14h integrally formed with clutch member 14, the above-mentioned pulling force acts on the inner races 154 of ball bearings 15A-15B. Then, the pulling force is finally transmitted to snap ring 101.

The second embodiment is configured such that the thrust force is received by only the snap ring 143, ball bearings 15A-15B, and snap ring 101, all constructing the restriction mechanism. Also, regarding ball bearings 30A-30B installed on the inner peripheral side of extension 10b, the engaged section 10f and the stepped portion 13c are configured such that the distance between them becomes narrow, and hence the normal ball bearings may be replaced with angular ball bearings. That is, the restriction mechanism may be provided on the inner peripheral side as well as the outer peripheral side of extension **10d**.

### THIRD EMBODIMENT

The third embodiment is hereunder explained in detail. Fig. 7 is a partial cross section illustrating the third embodiment in which the dry clutch of the first embodiment is applied to a hybrid vehicle. A damper 201 is installed on a crankshaft 200 of an engine Eng. The damper 201 is splined to a first input shaft 202. The first input shaft 202 is fitted into an axial bore formed in the crankshaft 200 and rotatably supported such that relative rotation between them is permitted. The damper 201 is comprised of two disk-shaped members and coil springs installed between these disk-shaped members, and configured to suppress vibrations in the rotational direction and also to absorb vibrations in the inclined direction (in the left-to-right direction, viewing in the drawing).

The second rotor 19 is connected to the first input shaft 202. The second rotor 19 is rotatably supported by a bearing 400 installed on the inner periphery of a partition wall 401. A needle bearing 210 is interposed between the cylindrical-hollow portion formed in the second rotor 19 and the small-diameter portion 13b. The needle bearing supports both the first rotor 13 and the second rotor 19, while permitting relative rotation between them. The small-diameter portion 13b of the first rotor 13 is supported by the needle bearing 210 installed on the inside of the cylindrical-hollow portion of the second rotor 19, and thus the needle bearing 210 can be laid out to overlap with the bearing 400 installed to be substantially conformable to the partition wall 401 in the rotation-axis direction.
Therefore, even when a force, oriented in the direction perpendicular to the rotation-axis direction, acts on the supporting portion between the first rotor 13 and the second rotor 19, there is a less occurrence of moment of force, imposed on one of the first and second rotors from the other and acting in the inclined direction (the left-to-right direction, viewing in the drawing). The first rotor 13 has an axial oil passage L10 formed in its inner periphery, so as to supply lubricating oil supplied from a control valve unit (not shown) to the oil passage L1. This ensures an adequate supply of lubricating oil to the needle bearing 210.

A rotor 203 of an electric motor is installed on the outer periphery of the clutch member 14. A stator 204 of the electric motor is arranged outside of the rotor 203 and installed on the inner periphery of an outer wall 402. An air gap 206 is defined between the rotor 203 and the stator 204. A seal 205 is formed on one end of the rotor 203, facing the engine side, to provide a fluid-tight seal, kept in a sliding-contact relationship with the partition wall 401.

The first rotor 13 is rotatably supported by ball bearings 15A and 15B (collectively referred to as "ball bearings 15"), installed on the inner periphery of cylinder member 10. The cylinder member 10 is supported by a partition wall 403. That is, the hybrid vehicle of the **second** embodiment is equipped with an electric drive unit accommodated between the engine Eng and an automatic transmission 500. The electric drive unit is a drive unit in which the electric motor and the dry clutch are accommodated in a unit housing, comprised of the partition wall 401, the outer wall 402, and the partition wall 403. Therefore, it is possible to provide the friction coupling device equipped with the electric motor, which has the rotor 203 fixedly connected to the rotatable member (the first rotor 13) and the stator 204 fixedly connected to the outer wall (the unit housing 401, 402, and 403) so as to define the air gap **205** on the outer peripheral side of rotor 203 between rotor 203 and stator, the motor laid out to surround the outer periphery of the friction plates (clutch plates 17) and the actuator (piston 11 and the like).

A second input shaft 300 is connected to the first rotor 13. Power, inputted into the second input shaft 300, is transmitted from the second input shaft 300 to a forward/reverse changeover mechanism 600 and a belt-drive continuously-variable automatic transmission 500, so as to rotate drive road wheels (not shown). An oil pump O/P is provided outside of the forward/reverse changeover mechanism 600. The oil pump O/P is driven by the second input shaft 300 via a chain.

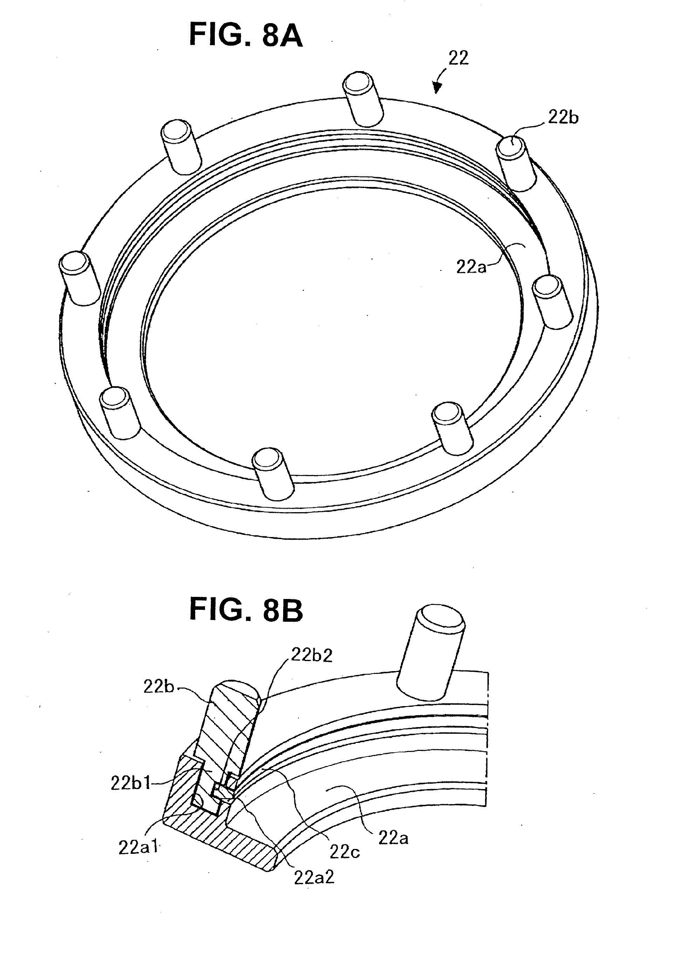

Figs. 8A-8B are perspective views illustrating a detailed structure of the second piston applied to the **second** embodiment. As shown in Fig. 8A, the second piston 22 has an annular piston-body section 22a and a lug section 22b having a plurality of circumferentially-equidistant-spaced put-up lugs. As shown in Fig. 8B, the piston-body section 22a is formed with lug-mounting holes 22a1 and a ring groove 22a2 opening into each of lug-mounting holes 22a1. Each of the lugs of lug section 22b is formed with an insertion portion 22b1 inserted into the associated lug-mounting hole 22a1 and a notch 22b2 leveled with the ring groove 22a2 as viewed in the axial direction, with the insertion portions 22b1 inserted into the respective lug-mounting holes. By inserting each of the lugs of lug section 22b into the respective lug-mounting holes 22a1, and by installing and fitting a snap ring 22c to the ring groove 22a2, the piston-body section 22a and the lug section 22b are assembled to each other, thereby producing the second piston 22.

(4) The friction coupling device includes a cylinder member 10 (a non-rotational member) configured to rotatably support a first rotor **14** and a second rotor 19, dry-clutch plates **17a** for coupling or uncoupling the first rotor **14** and the second rotor 19, a motor employing a stator 204 supported on a unit housing having the cylinder member 10 and **fixed to** the dry-clutch plates **17a,** such that the motor covers the outer periphery of the clutch plates **17a** and the outer periphery of the piston mechanism, and a restriction mechanism for restricting a thrust force, acting in the rotation-axis direction, from being transmitted between the first rotor **14** and the second rotor 19 when a pressing force is applied to the clutch plates **17a** by the piston mechanism. Hence, when a pressing force is applied from the piston provided in the cylinder member **19** to clutch plates **17a**, there is no force that acts between a partition wall 401 and an outer wall 402 of the unit housing, which constructs an integumentary covering, in a manner so as to widen the unit housing. Thus, it is possible to avoid upsizing of the unit housing and an increase in weight of the unit housing.
(5) Rotor **204** is fixedly connected to the first rotor **14** so as to cover the outer periphery of dry-clutch plates **17a** and the outer periphery of the piston mechanism, whereas stator 204 is fixedly connected to the unit housing to cover the outer periphery of rotor 203.
Hence, it is hard to deform the unit housing serving as the non-rotational member, and thus it is possible to realize a narrower air gap 206, thereby realizing the high-output motor.
Additionally, the first rotor **14** is supported by means of a needle bearing 210 and ball bearings 15. This enables a stable support of the first rotor **14,** thus enabling air gap 206 between rotor 203 and stator 204 to narrow, thereby realizing the high-output motor.
(6) The piston mechanism includes a first piston 11 supported on the cylinder member 10, a motion-transmission means (a second piston 22 and a motion-transmission section 23b) supported on the first rotor **14** and configured to transmit the pressing force, produced by a stroke of the first piston 11, to clutch plates **17a,** and a thrust bearing 12 interposed between the first piston 11 and the transmission means, permitting relative rotation between the first piston 11 and the transmission means.
Hence, relative rotation between cylinder member 10 and clutch plates **17a** can be attained via the thrust bearing 12, and thus it is possible to reduce a frictional loss.
(7) The restriction mechanism is configured to restrict relative movement between the first rotor **14** and the cylinder member 10 in the rotation-axis direction, when the pressing force is applied to clutch plates **17a** by the piston mechanism.
Hence, the relationship of relative position between rotor 203 and stator 204 can be kept constant, even during application of the pressing force, thus improving the motor output.

While the foregoing is a description of the first to third embodiments carried out the invention, it will be understood that the invention is not limited to the particular embodiments shown and described herein, but that various changes and modifications may be made. For instance, the friction coupling device of each of the first to third embodiments is applied to a clutch configured to couple or uncouple two rotors. The fundamental concept of the invention may be applied to a brake configured to couple and uncouple a non-rotational member with and from a rotational member. Also, the friction coupling device is exemplified in a dry clutch, but the device may be applied to a wet clutch.

## Claims

1. A friction coupling device comprising:
a cylinder member supported on an outer wall and having a cylinder chamber;
a **piston** for pushing friction plates by an oil pressure occurring in the cylinder chamber;
a drum member for supporting the friction plates;
a bearing disposed between the cylinder member and the drum member for permitting relative rotation between the cylinder member and the drum member; and
a restriction mechanism for restricting relative movement between the cylinder member and the drum member in an axial direction via the bearing.

2. The friction coupling device as claimed in claim 1, wherein:
the restriction mechanism is configured to restrict the relative movement between the cylinder member and the drum member in the axial direction by abutting the bearing with a stepped portion formed on one of the cylinder member and the drum member and a snap ring installed on the other of the cylinder member and the drum member.

3. The friction coupling device as claimed in claim 1, wherein:
the restriction mechanism is configured to restrict the relative movement between the cylinder member and the drum member in the axial direction by abutting the bearing with a stepped portion formed on the cylinder member and a stepped portion formed on the drum member.

4. The friction coupling device as claimed in claim 1, wherein:
the restriction mechanism is configured to restrict the relative movement between the cylinder member and the drum member in the axial direction by abutting the bearing with a snap ring installed on the cylinder member and a snap ring installed on the drum member.

5. The friction coupling device as claimed in **any one of preceding claims 1 to 4,** wherein:
the **piston** comprises a first piston supported on the cylinder member, a second piston operated responsively to a stroke of the first piston, and a bearing interposed between the first piston and the second piston for permitting relative rotation between the first and second pistons; and
the friction plates are dry clutch plates provided for coupling or uncoupling two rotors.

6. A friction coupling device comprising:
a cylinder member supported on an outer wall and having a cylinder chamber;
a piston for pushing friction plates by an oil pressure occurring in the cylinder chamber;
a drum member for supporting the friction plates; and
a restriction mechanism provided on the cylinder member for receiving a force applied from the drum member in a pressing direction of the piston.

7. A friction coupling device comprising:
a rotatable member rotatably supported on an outer wall and configured to support friction plates;
an actuator supported on the outer wall for producing a pressing force that pushes the friction plates;
a restriction means for restricting relative movement of the friction plates to the rotatable member during action of the pressing force; and
a restriction means for restricting relative movement of the rotatable member to a part of the outer wall closer to the actuator.

8. The friction coupling device as claimed in claim 7, which further comprises:
an electric motor having a rotor fixedly connected to the rotatable member and a stator fixedly connected to the outer wall so as to define an air gap on an outer peripheral side of the rotor between the rotor and the stator, the motor laid out to surround an outer periphery of the friction plates and the actuator.
